# EUROPÄISCHE PATENTSCHRIFT

(11) **EP 2 377 598 B1**
(45) Veröffentlichungstag und Bekanntmachung des Hinweises auf die Patenterteilung: **28.08.2013**
(21) Anmeldenummer: 11003002.0
(22) Anmeldetag: 09.04.2011
(51) Int. Cl.: B01D 53/22, B29C 65/02, B01D 69/10, B01D 71/36, B01D 67/00, C08J 5/12, C09J 5/06, B29C 63/08, B01D 65/00, C12M 1/24, B01D 63/08

(54) **Verfahren zur biokompatiblen Verbindung einer multifunktionalen PTFE-Membran oder -Folie mit einem Kunststoffteil**
Method for biocompatible combination of a multifunctional PTFE membrane or film with a plastic part
Procédé de liaison biocompatible d'une membrane ou d'une feuille PTFE multifonctionnelle à l'aide d'un élément en plastique

(30) Priorität: 16.04.2010 DE 102010015192
(43) Veröffentlichungstag der Anmeldung: 19.10.2011
(73) Patentinhaber: Astrium GmbH, 82024 Taufkirchen (DE)
(72) Erfinder: Kern, Peter, Dr., 88626 Salem (DE)
(74) Vertreter: Daub, Thomas

(56) Entgegenhaltungen:
- WO-A2-91/11374
- DE-A1- 2 529 153
- US-A- 5 342 673

## Beschreibung

Die Erfindung betrifft ein Verfahren zur biokompatiblen Verbindung einer multifunktionalen PTFE-Membran mit einem Kunststoffteil, wobei die zu verbindenden Elemente insbesondere für biologische Experimente verwendet werden sollen, insbesondere in der Schwerelosigkeit.

Viele biologische Experimente werden in sterilisierten Kunststoffgefäßen durchgeführt. Um die biologischen Proben während des Experimentes visuell beobachten oder optisch vermessen zu können, benötigen diese Gefäße ein transparentes Fenster. Um dieses Fenster gleichzeitig auch als Gasaustauscher verwenden zu können, wird dazu eine Kunststoff-Membran oder -Folie verwendet. Diese muss mit gängigen Sterilisationsverfahren (Heißsterilisation oder Bestrahlung oder Einsatz von Sterilisierungslösungen, etc.) kompatibel sein.

In der Praxis können einzelne Elemente mehrere Funktionen ausführen. Solche multifunktionalen Elemente sind insbesondere dünne, hochtransparente Membranen oder -Folien aus Polytetrafluorethen (PTFE), auch unter dem Handelsnamen TeflonⓇ sowie TeflonⓇFEP, TeflonⓇPFA für daraus abgeleitete Produkte bekannt. Diese haben exzellente optische Eigenschaften, sie weisen insbesondere eine hohe Transmission auf, sind optisch klar und haben eine sehr geringe Eigenfluoreszenz. Zusätzlich zeichnen sie sich durch eine sehr hohe Permeabilität für Sauerstoff und Kohlendioxid aus, was für den Gasaustausch des Experimentes genutzt wird, und sie weisen eine sehr geringe Permeabilität für Wasser auf, womit das Verdunsten des Lösungsmittels verhindert wird; die Konzentration des Kultivierungsmediums bleibt unverändert.
Auch sind die damit ausgerüsteten Gefäße sterilisierbar.

Bisher werden diese Membranen oder -Folien mechanisch befestigt (geklemmt) oder sie werden mittels eines Klebers aufgebracht. Dieser ist jedoch häufig cytotoxisch für das verwendete biologische System.

Die bekannten mechanischen Verfahren haben den Nachteil, dass zusätzliche Teile benötigt werden, diese zusammengebaut werden müssen, und dass die Dichtigkeit gegen Flüssigkeitsverlust ein sehr sorgfältiges Arbeiten beim Zusammenbau erfordert. Diese Lösung hat ein hohes Fehlerrisiko.

Die bekannten Klebeverfahren haben den Nachteil, dass die verwendeten Kleber, selbst wenn sie als nicht-cytotoxisch klassifiziert sind, nicht generell biokompatibel sind. Besonders empfindliche Zellkulturen mit Säugetierzellen weisen häufig spezifische cytotoxische Reaktionen auf. Daher sind in Vorbereitung solcher Experimente zusätzliche, umfangreiche Untersuchungen zur Biokompatibilität und/oder der Cytotoxizität des verwendeten biologischen Systems mit dem gewählten Kulturgefäß erforderlich.

Die WO91/11374 A2 beschreibt die Verbindung einer dampfdurchlässigen PTFE-Membrane mit der Kunststoffbeschichtung einer Folie, wobei die Verbindung von PTFE-Folie und Kunststoffbeschichtung unter Temperatur und Druck vorgenommen wird. Die Temperatur beträgt 210°C. Das Verfahren wird für die Herstellung einer sterilisierbaren Verpackung angewandt.

Die DE 25 29 153 A1 beschreibt die Herstellung eines porösen PTFE-Diaphragmas für eine Elektrolysezelle aus mehreren einzelnen PTFE-Platten. Dabei werden die einzelnen PTFE-Platten an ihren Rändern mit einem schmelzbaren Polymer unter Druck und Temperatur verbunden. Die verwendeten Temperaturen liegen im Bereich zwischen 260°C und 300°C.

Der Erfindung liegt die Aufgabe zugrunde, eine Methode zur Verbindung der multifunktionalen PTFE-Membran oder -Folie mit den Kunststoffteilen des gewählten Kulturgefäßes zu schaffen, mit dem die Biokompatibilität per-se gegeben ist und sich zusätzliche Testreihen erübrigen.

Diese Aufgabe wird mit dem Verfahren nach dem Patentanspruch gelöst.

Das neue Verfahren verwendet weder Kleber noch zusätzliche mechanische Komponenten. Es verbindet die PTFE-Membran oder -Folie direkt mit dem Kunststoffgehäuse des Kulturgefäßes, so dass jegliche Biokompatibilitätsprobleme infolge des Aufbringens der Membran oder -Folie vermieden werden.

Das erfindungsgemäße Verbindungsverfahren basiert dabei auf dem direkten Verbinden der multifunktionalen PTFE-Membranen oder -Folien mit dem Kunststoffteil mittels erhöhter Temperatur und Druck, wobei die Verbindungstemperatur über dem Schmelzpunkt des Kunststoffteils, aber unter dem Schmelzpunkt der Teflonmembran liegt.

Das erfindungsgemäße Verbindungsverfahren kann für Experimentierausrüstungen in der Biologie, Biotechnologie, Medizin, Pharmakologie und Analytik eingesetzt werden.

### Beispiel

Eine PTFE-Membran mit der Dicke von 25µm (generell bewegen sich die Dicken der Membranen im Bereich kleiner 100µm) wurde auf einen Rahmen eines niedrigschmelzenden Kunstoffs, hier aus Acrylnitril-Butadien-Styrol (ABS) durch Anpressen aufgebracht. Die Arbeitstemperatur in diesem Beispiel betrug ca. 130°C - 160°C, die Anpresszeit 5-10 Sekunden

Die Prozessparameter zum Verbinden der PTFE-Folie mit Gehäusen aus anderen Kunststoffen z. B. Polycarbonat (PC), Polysulfon (PSU), Polyether(ether)keton (PEEK), Polyoxymethylen (POM) kann der Fachmann im Detail jeweils individuell ermitteln.

### Vorteile

Zum Aufbringen der multifunktionalen PTFE-Membran auf den Träger werden keine weiteren Stoffe oder zusätzliche Bauteile benötigt.

Durch die Prozessparameter werden die optischen und physikalischen Eigenschaften der PTFE-Membran nicht beeinträchtigt, so dass sie gleichzeitig als
● leckfreies Fenster zum Abschluss des Kulturgefäßes,
● optisches Fenster zum Beobachten und zur Anwendung optischer Messverfahren (Mikroskopie, Photometrie, Fluoreszenz, Lumineszenz, etc.)
● Gastauscher mit hoher Permeabilität für Sauerstoff und CO2 sowie geringem Wasserverlust
eingesetzt werden kann.

Die Biokompatibilität ist durch die Verwendung der bereits erprobten Materialen gegeben.

Es werden keine zusätzlichen Testreihen zur Überprüfung der Biokompatibilität oder der cytotoxischen Einflüsse benötigt.

## Patentansprüche

1. Verfahren zur biokompatiblen Verbindung einer multifunktionalen PTFE-Membran oder -Folie, die eine optische Transparenz, eine geringe Eigenfluoreszenz und eine geringe Permeabilität für Wasser aufweist, mit dem Kunststoffgehäuse eines Kulturgefäßes für Experimentierausrüstungen in der Biologie, Biotechnologie, Medizin, Pharmakologie und Analytik, **gekennzeichnet durch** eine direkte Verbindung der multifunktionalen PTFF-Membran mit dem Kunststoffgehäuse unter erhöhter Temperatur und erhöhtem Druck, wobei die Temperatur über dem Schmelzpunkt des Kunststoffgehäuses, aber unter dem Schmelzpunkt der PTFE-Membran bzw. -Folie liegt.

## Claims

1. Method for biocompatible connection of a multi-functional PTFE membrane or PTFE film which has optical transparency, low inherent fluorescence and low permeability to water with the plastic housing of a culture vessel for experimentation appliances in biology, biotechnology, medicine, pharmacology and analytics, **characterized by** direct connection of the multifunctional PTFE membrane with the plastic housing at elevated temperature and elevated pressure, wherein the temperature is above the melting point of the plastic housing, but below the melting point of the PTFE membrane or PTFE film.

## Revendications

1. Procédé pour la connexion biocompatible d'une membrane PTFE ou d'un film PTFE multifonctionnel, qui présente une transparence optique, une faible fluorescence propre et une faible perméabilité à l'eau, avec le boîtier en matière plastique d'un récipient de culture pour des équipements expérimentaux en biologie, biotechnologie, médecine, pharmacologie et analyse, **caractérisé par** une connexion directe de la membrane PTFE multifonctionnel avec le boîtier en matière plastique à une température élevée et sous une pression élevée, la température étant supérieure au point de fusion du boîtier en matière plastique, mais inférieure au point de fusion de la membrane PTFE ou du film PTFE.
